# EUROPÄISCHE PATENTSCHRIFT

(11) **EP 1 295 745 B1**
(45) Veröffentlichungstag und Bekanntmachung des Hinweises auf die Patenterteilung: **24.12.2008**
(21) Anmeldenummer: 02021027.4
(22) Anmeldetag: 20.09.2002
(51) Int. Cl.: B60J 7/08, B62D 65/00, B60R 13/04

(54) **Fahrzeugdach mit einer Befestigungsvorrichtung für eine Zierleiste**
Vehicle roof with fixation device for finishing moulding
Toit de véhicule avec dispositif de fixation pour moulure décorative

(30) Priorität: 25.09.2001 DE 10147014
(43) Veröffentlichungstag der Anmeldung: 26.03.2003
(73) Patentinhaber: Webasto AG, 82131 Stockdorf (DE)
(72) Erfinder: Braun, Robert, 82335 Berg (DE); de Gaillard, François, 85390 Mouilleron en pareds (FR); Elbs, Norbert, 80797 München (DE); Kölbl, Michael, 82061 Neuried (DE)
(74) Vertreter: Wiese, Gerhard

(56) Entgegenhaltungen:
- US-A- 4 304 435
- US-A- 4 749 225
- US-A- 6 152 518
- US-B1- 6 279 989

## Beschreibung

Die Erfindung betrifft ein Fahrzeugdach mit seitlichen festen Dachteilen und wenigstens einem zwischen diesen befestigbaren Dachmodul und mit einer den Verbindungsbereich zwischen seitlichen Dachteilen und dem Dachmodul abdekkenden Zierleiste.

Aus der gattungsgemäßen DE 35 45 870 A1 ist ein Dachmodul bekannt, bei dem ein von einem seitlichen Dachteil bereitgestellter abgesenkter Flansch nach Verbinden mit dem von oben aufgesetzten Dachmodul mittels einer Zierleiste abgedeckt wird. Die Verbindung erfolgt meist durch Kleben oder eine Rastverbindung am seitlichen Dachteil.

Es ist Aufgabe der vorliegenden Erfindung, eine vereinfachte Befestigung für eine Zierleiste bereitzustellen.

Diese Aufgabe wird dadurch gelöst, daß das Dachmodul mit einer Befestigungsvorrichtung versehen ist, an welcher die Zierleiste lösbar befestigt ist. Vorteilhafte Ausgestaltungen der Erfindung sind den Unteransprüchen zu entnehmen.

Durch die Anbringung der Befestigungsvorrichtung am Dachmodul ist eine vorbereitende Montage der Zierleiste beim Fahrzeugzulieferer möglich. Das zusätzliche Hantieren mit der relativ dünnen und daher leicht zu verbiegenden Zierleiste am Montageband beim Fahrzeughersteller entfällt dadurch.

Die Befestigungsvorrichtung weist bevorzugt einen im wesentlichen horizontal verlaufenden Clip zur Befestigung an einer nach außen vorspringenden Rippe des Dachmoduls auf. Der Clip besteht aus zwei voneinander beabstandeten federnden Zungen, die die Rippe umgreifen und sich bevorzugt zusätzlich mit Rasteinrichtungen in dieser verrasten können.

Der Bereich des Dachmoduls, an dem die Befestigungsvorrichtung angeordnet ist, ist bevorzugt gegenüber der Oberfläche des Dachmoduls abgesenkt, damit nach der Montage des Dachmoduls mit eingesetzter Zierleiste ein Erscheinungsbild mit einer bündigen Oberfläche entsteht.

Die Befestigungsvorrichtung weist zur Halterung einer sich im wesentlichen an der Zierleiste vertikal nach unten erstreckenden Halteleiste einen vertikalen Clip auf, der bevorzugt ein wellen- oder sägezahnförmiges Rastprofil aufweist, um eine Höheneinstellung der Zierleiste vornehmen zu können.

Bevorzugt weist die Befestigungsvorrichtung einander gegenüberliegende Federelemente auf, die bei eingebautem Dachmodul sich zum einen an dessen Außenkante und sich zum anderen an der Innenseite eines benachbarten seitlichen Dachteils abstützen und dadurch die Befestigungsvorrichtung in dem grabenförmigen Verbindungsbereich zentrieren.

Die Zierleiste weist bevorzugt wenigstens eine Dichtung zur Anlage am Dachmodul bzw. am seitlichen Dachteil auf. Zur Befestigung der Dichtung an der Zierleiste kann diese bevorzugt mit einer nutförmigen Dichtungsaufnahme versehen sein.

Nachfolgend sind zwei Ausführungsbeispiele der Erfindung anhand der Zeichnung erläutert. Es zeigt:
- Fig. 1: eine schematische perspektivische Ansicht eines Fahrzeugdachs mit ei nem Dachmodul vor der Montage,
- Fig. 2: einen Querschnitt durch den Verbindungsbereich des Dachmoduls zum seitlichen Dachteil gemäß der Linie II-II in Fig. 1,
- Fig. 3: eine schematische perspektivische Ansicht eines seitlichen Ausschnitts eines Dachmoduls mit einer ersten Ausführungsform einer Befestigungsvorrichtung, und
- Fig. 4: eine schematische perspektivische Ansicht einer zweiten Ausführungsform einer Befestigungsvorrichtung mit zusätzlichen Federelementen.

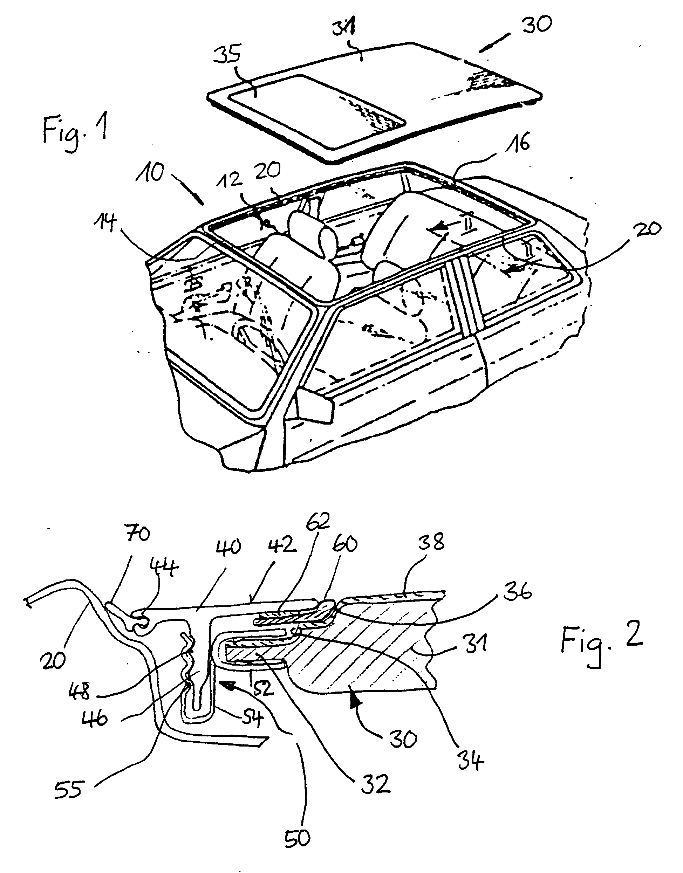

In Fig. 1 ist ein Fahrzeugdach 10 gezeigt, das über eine große Dachöffnung 12 verfügt, die nach vorne von einem vorderen Querholm 14, nach hinten durch einen hinteren Querholm 16 und zu den Seiten von seitlichen Dachteilen 20 begrenzt wird. Die seitlichen Dachteile 20 sind als Seitenholme mit einem nach innen vorspringenden abgesenkten Flanschbereich ausgebildet. Ebenso können der vordere Querholm 14 und der hintere Querholm 16 abgesenkte Flanschbereiche aufweisen, auf denen von oben herein insgesamt mit 30 bezeichnetes Dachmodul aufgesetzt und in nicht dargestellter Weise - beispielsweise durch Verschrauben oder Verkleben - verbunden wird.

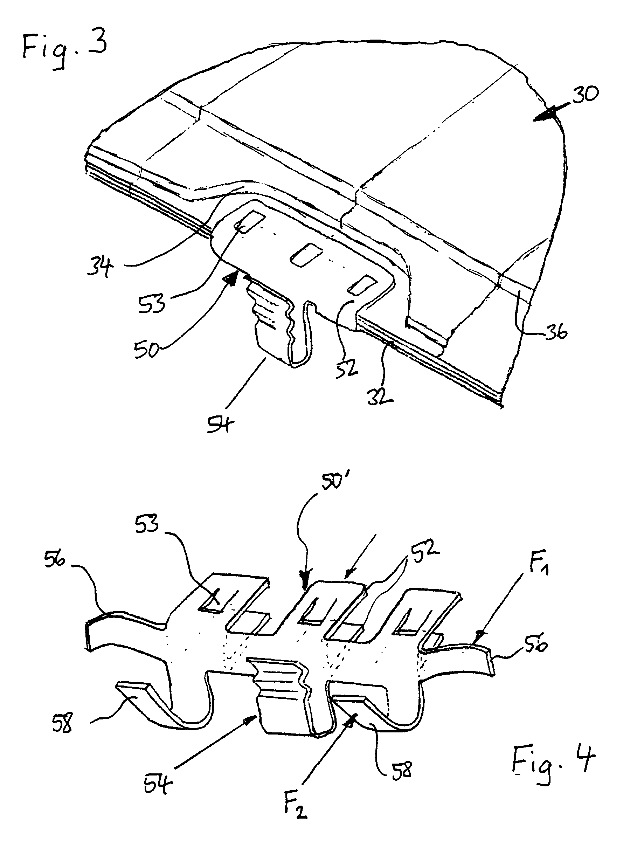

Das Dachmodul 30 besteht aus einer beispielsweise geschäumten Platte 31 mit einer festen Oberflächenschicht oder Deckschicht 38 aus einer Kunststoff- oder Metallfolie. Das Dachmodul kann auch einen oder mehrere öffnungsfähige Deckel 35 beherbergen. Im Randbereich weist das Dachmodul 30 eine gegenüber der oberen Deckschicht 38 nach unten abgesetzte, im wesentlichen horizontal nach außen vorspringende Rippe 32 auf. Die Rippe 32 kann entweder in konstanter Breite um den gesamten Umfang der Platte 31 verlaufen oder - wie in Fig. 3 gezeigt - in Form von Ausbuchtungen 34 nach innen verbreitert sein, die zur Aufnahme jeweils einer Befestigungsvorrichtung 50 bzw. 50' dienen. Zwischen der oberen Deckschicht 38 des Dachmoduls 30 und der Rippe 32 ist eine stufenförmige Absetzung 36 vorgesehen. Diese dient - wie Fig. 2 zeigt - der Aufnahme und Anlage einer oberen Deckfläche 42 bzw. einer an deren innerem Randbereich angeordneten Dichtung 60 einer Zierleiste 40.

Die Befestigungsvorrichtung 50 ist mittels eines oder mehrerer im wesentlichen horizontal verlaufender Clips 52 an der Rippe 32 des Dachmoduls 30 befestigt. Die Clips 52 können zusätzlich ausgebrochene Laschen mit Federzungen 53 aufweisen, die in entsprechende nicht dargestellte Rastvertiefungen an der Oberseite der Rippen 32 eingreifen und das seitliche Verrutschen der Clips 52 verhindern.

Die Befestigungsvorrichtung 50 weist ferner wenigstens einen im wesentlichen vertikal nach oben verlaufenden Clip 54 auf, der im Querschnitt U-förmig gebildet ist und zwischen dessen beiden vertikalen Schenkeln ein vertikaler Haltesteg 46 der Zierleiste 40 eingeklemmt wird. Um die Verrastung des Haltesteges 46 gegenüber der Befestigungsvorrichtung 50 bzw. dem Clip 54 weiter zu erhöhen, ist bevorzugt eines der Teile - in diesem Falle der Haltesteg 46 - mit einem wellenoder sägezahnförmigen Rastprofil 48 versehen, das mit einem Gegenprofil 55 am anderen Teil - hier am Clip 54 - zusammenwirkt. Das Rastprofil 48 ist bevorzugt sehr fein gezahnt, so daß es eine feinstufige Höheneinstellung der Zierleiste 40 gegenüber der Befestigungsvorrichtung 50 und somit gegenüber dem Dachmodul 30 ermöglicht.

Die Zierleiste 40 ist im Querschnitt in etwa T-förmig ausgebildet. Ihre obere Deckfläche 42 liegt bei montiertem Dachmodul 30 in etwa bündig mit der Deckschicht 38 der Platte 31. An der Innenseite der Deckfläche 42 ist mittels einer Klebefläche 62 eine Dichtung 60 befestigt, die den Spalt zwischen der Zierleiste 40 und dem Dachmodul 30 ausfüllt und für eine weiche, geräuschmindernde Anlage sorgt.

An der Außenseite der oberen Deckfläche 42 der Zierleiste 40 ist eine nutförmige Dichtungsaufnahme 44 zur Aufnahme einer Dichtung 70 vorgesehen, die sich bei montiertem Dachmodul 30 an die Innenseite des holmförmigen seitlichen Dachteils 20 anlegt.

Bei der in der Fig. 4 gezeigten Ausführungsform weist die Befestigungsvorrichtung 50' zusätzliche Federelemente in Form von Federbügeln 56 bzw. 58 auf. An der Innenseite der Befestigungsvorrichtung 50' sind nach innen gebogene Federbügel 56 vorgesehen, die sich bei montierter Befestigungseinrichtung 50' an der Außenkante der Rippe 32 abstützen. Die Federkraft F1 drückt die Befestigungsvorrichtung 50' dabei nach außen.

An der Außenseite der Befestigungseinrichtung 50' sind Federbügel 58 nach außen vorgebogen, die sich bei montiertem Dachmodul 30 an der Innenseite des benachbarten seitlichen Dachteils 20 anlegen. Die Federkraft F2 drückt dabei die Befestigungsvorrichtung 50' nach innen. Durch die gegeneinander wirkenden Federkräfte F1 und F2 wird die Befestigungsvorrichtung 50' und mit ihr auch die von ihr getragene Zierleiste 40 in dem grabenförmigen Flanschbereich zwischen seitlichem Dachteil 20 und Dachmodul 30 zentriert. Dadurch können Fertigungs- und Montagetoleranzen in einfacher Weise selbsttätig ausgeglichen werden.

### Bezugszeichenliste

- 10: Fahrzeugdach
- 12: Dachöffnung
- 14: vorderer Querholm
- 16: hinterer Querholm
- 20: seitliche Dachteile
- 30: Dachmodul
- 31: Platte
- 32: Rippe
- 34: Ausbuchtung
- 35: Deckel
- 36: Absetzung
- 38: Deckschicht
- 40: Zierleiste
- 42: Deckfläche
- 44: Dichtungsaufnahme
- 46: Haltesteg
- 48: Rastprofil
- 50: Befestigungsvorrichtung (für 40)
- 52: (horizontaler) Clip
- 53: Federzunge
- 54: (vertikaler) Clip
- 55: Gegenprofil
- 56: Federbügel (innen)
- 58: Federbügel (außen)
- 60: Dichtung (an Innenseite)
- 62: Klebefläche
- 70: Dichtung (an Außenseite)

## Patentansprüche

1. Fahrzeugdach mit seitlichen festen Dachteilen (20) und wenigstens einem zwischen diesen befestigbaren Dachmodul (30) und mit einer den Verbindungsbereich zwischen seitlichen Dachteilen (20) und dem Dachmodul (30) abdeckenden Zierleiste (40), **dadurch gekennzeichnet, daß** das Dachmodul (30) mit einer Befestigungsvorrichtung (50) versehen ist, an welcher die Zierleiste (40) lösbar befestigt ist.

2. Fahrzeugdach nach Anspruch 1, **dadurch gekennzeichnet, daß** die Befestigungsvorrichtung (50) einen im wesentlichen horizontalen Clip (52) zur Befestigung an einer Rippe (32) des Dachmoduls (30) aufweist.

3. Fahrzeugdach nach einem der vorhergehenden Ansprüche, **dadurch gekennzeichnet, daß** der Bereich des Dachmoduls (30), an dem die Befestigungsvorrichtung (50) angeordnet ist, gegenüber der Oberfläche des Dachmoduls (30) abgesenkt ist.

4. Fahrzeugdach nach einem der vorhergehenden Ansprüche, **dadurch gekennzeichnet, daß** die Befestigungsvorrichtung (50) einen im wesentlichen vertikalen Clip (54) zur Halterung eines Haltesteges (46) der Zierleiste (40) aufweist.

5. Fahrzeugdach nach Anspruch 4, **dadurch gekennzeichnet, daß** der vertikale Clip (54) und/oder der Haltesteg (46) ein Rastprofil (48) bzw. ein mit diesem zusammenwirkendes Gegenprofil (55) aufweisen.

6. Fahrzeugdach nach einem der vorhergehenden Ansprüche, **dadurch gekennzeichnet, daß** die Befestigungsvorrichtung (50) Federelemente (56 bzw. 57) aufweist, die bei eingebautem Dachmodul (30) sich zum einen an diesem und zum anderen am benachbarten seitlichen Dachteil (20) federnd abstützen und dadurch die Befestigungsvorrichtung (50) im Zwischenraum zwischen Dachmodul (30) und seitlichem Dachteil (20) zentrieren.

7. Fahrzeugdach nach einem der vorhergehenden Ansprüche, **dadurch gekennzeichnet, daß** an der Zierleiste (40) wenigstens eine Dichtung (60 bzw. 70) zur Anlage am Dachmodul (30) bzw. am seitlichen Dachteil (20) vorgesehen ist.

8. Fahrzeugdach nach Anspruch 7, **dadurch gekennzeichnet, daß** die Zierleiste (40) wenigstens eine Dichtungsaufnahme (44) zur Befestigung der Dichtung (70) aufweist.

## Claims

1. Vehicle roof having fixed side roof parts (20) and at least one roof module (30) which can be fixed between the latter, and having a decorative moulding (40) covering the connecting region between side roof parts (20) and the roof module (30), **characterized in that** the roof module (30) is provided with a fixing device (50), to which the decorative moulding (40) is detachably fixed.

2. Vehicle roof according to Claim 1, **characterized in that** the fixing device (50) has a substantially horizontal clip (52) to be fixed to a rib (32) of the roof module (30).

3. Vehicle roof according to one of the preceding claims, **characterized in that** the region of the roof module (30) on which the fixing device (50) is arranged is countersunk with respect to the surface of the roof module (30).

4. Vehicle roof according to one of the preceding claims, **characterized in that** the fixing device (50) has a substantially vertical clip (54) for retaining a retaining web (46) of the decorative moulding (40).

5. Vehicle roof according to Claim 4, **characterized in that** the vertical clip (54) and/or the retaining web (46) have a latching profile (48) and a mating profile (55) interacting with the latter.

6. Vehicle roof according to one of the preceding claims, **characterized in that** the fixing device (50) has spring elements (56 and 57) which, when the roof module (30) is installed, are supported in a sprung manner firstly on the latter and secondly on the adjacent side roof part (20) and, as a result, centre the fixing device (50) in the interspace between roof module (30) and side roof part (20).

7. Vehicle roof according to one of the preceding claims, **characterized in that** at least one seal (60 and 70, respectively) is provided on the decorative moulding (40) to rest on the roof module (30) and, respectively, on the side roof part (20).

8. Vehicle roof according to Claim 7, **characterized in that** the decorative moulding (40) has at least one seal holder (44) for fixing the seal (70).

## Revendications

1. Toit de véhicule comprenant des parties latérales fixes (20) et au moins un module de pavillon (30) pouvant être fixé entre ces dernières, ainsi qu'une moulure décorative (40) recouvrant la zone de liaison entre des parties latérales (20) du toit et le module de pavillon (30), **caractérisé par le fait que** ledit module de pavillon (30) est pourvu d'un dispositif de fixation (50) auquel la moulure décorative (40) est fixée de manière libérable.

2. Toit de véhicule, selon la revendication 1, **caractérisé par le fait que** le dispositif de fixation (50) présente une pièce crantable (52) sensiblement horizontale, en vue de la fixation à une nervure (32) du module de pavillon (30).

3. Toit de véhicule, selon l'une des revendications précédentes, **caractérisé par le fait que** la région du module de pavillon (30), sur laquelle le dispositif de fixation (50) est implanté, est encaissée vis-à-vis de la surface dudit module de pavillon (30).

4. Toit de véhicule, selon l'une des revendications précédentes, **caractérisé par le fait que** le dispositif de fixation (50) comporte une pièce crantable (54) sensiblement verticale, en vue de retenir une membrure d'arrêt (46) de la moulure décorative (40).

5. Toit de véhicule, selon la revendication 4, **caractérisé par le fait que** la pièce crantable verticale (54), et/ou la membrure d'arrêt (46), offre(nt) respectivement un profil de crantage (48) et un profil complémentaire (55) coopérant avec ce dernier.

6. Toit de véhicule, selon l'une des revendications précédentes, **caractérisé par le fait que** le dispositif de fixation (50) possède des éléments élastiques (56, respectivement 57) qui, à l'état intégré du module de pavillon (30), prennent élastiquement appui d'une part sur ledit module et, d'autre part, sur la partie latérale (20) du toit qui occupe une position voisine, et centrent ainsi ledit dispositif de fixation (50) dans l'espace intercalaire situé entre ledit module de pavillon (30) et ladite partie latérale (20) du toit.

7. Toit de véhicule, selon l'une des revendications précédentes, **caractérisé par le fait qu'**au moins une garniture d'étanchement (60, respectivement 70) est prévue sur la moulure décorative (40), pour venir respectivement s'appliquer contre le module de pavillon (30) ou contre la partie latérale (20) du toit.

8. Toit de véhicule, selon la revendication 7, **caractérisé par le fait que** la moulure décorative (40) est munie d'au moins un logement d'étanchement (44), en vue de la fixation de la garniture d'étanchement (70).
